# EUROPÄISCHE PATENTSCHRIFT

(11) **EP 0 639 120 B1**
(45) Veröffentlichungstag und Bekanntmachung des Hinweises auf die Patenterteilung: **10.12.1997**
(21) Anmeldenummer: 94909099.7
(22) Anmeldetag: 02.03.1994
(51) Int. Cl.: B23Q 5/58, F15B 15/26

(54) **WERKZEUGMASCHINE**
MACHINE-TOOL
MACHINE-OUTIL

(30) Priorität: 03.03.1993 DE 9303050 U
(43) Veröffentlichungstag der Anmeldung: 22.02.1995
(73) Patentinhaber: FESTO AG & Co, 73734 Esslingen (DE); CHIRON-WERKE GMBH & CO. KG, 78532 Tuttlingen (DE)
(72) Erfinder: STOLL, Kurt, D-73732 Esslingen (DE); PREUSSLER, Udo, D-70771 Leinfelden-Echterdingen (DE); GRUND, Peter, D-78647 Trossingen (DE)
(74) Vertreter: Abel, Martin, Dipl.-Ing.
(86) Internationale Anmeldenummer: EP9400600
(87) Internationale Veröffentlichungsnummer: WO9420261

(56) Entgegenhaltungen:
- EP-A- 0 205 030
- DE-A- 3 942 348
- DE-A- 4 010 040
- DE-C- 729 168
- US-A- 2 130 618
- US-A- 2 139 185
- US-A- 2 532 768
- US-A- 2 845 902
- US-A- 4 043 252
- US-A- 4 524 676

## Beschreibung

Die Erfindung betrifft eine Werkzeugmaschine mit einem Spindelstock und zumindest einem Werkzeugwechsler, der Bearbeitungswerkzeuge zwischen einer Magazinposition und einer Arbeitsposition transportiert, wobei dem Werkzeugwechsler als Antriebseinheit zumindest ein fluidisch betätigbarer Arbeitszylinder mit einem Zylindergehäuse zugeordnet ist, in dem ein Arbeitskolben axial bewegbar angeordnet ist.

Eine derartige Werkzeugmaschine ist zum Beispiel aus der EP 0 205 030 A2 bekannt. Der Arbeitszylinder befindet sich hier in einer hängenden Lage, wobei die mit dem Kolben verbundene Kolbenstange vertikal nach unten weist und den handzuhabenden Gegenstand, in der Regel ein Bearbeitungswerkzeug, trägt. Zu Zeiten außerhalb der Betriebsbereitschaft befindet sich der Arbeitszylinder im eingefahrenen Zustand, wobei der Arbeitskolben eine Hubendlage im Bereich der oben liegenden Abschlußwand des Zylindergehäuses einnimmt. Bei längeren Stillstandszeiten des Arbeitszylinders ist diese Hubendlage allerdings nicht stabil. Infolge Absinken des Betriebsdruckes tendiert der Kolben auf Grund der ständigen Gewichtsbelastung zu einem Absinken in Richtung der ausgefahrenen Stellung des Arbeitszylinders. Abgesehen von Gefahrensituationen kann dies auch zu Funktionsbeeinträchtigungen der mit dem Arbeitszylinder ausgestatteten Werkzeugmaschine führen. Man hat daher bisher durch externe und sehr aufwendige Stützkonstruktionen versucht, den Arbeitszylinder in Ruhezeiten zu fixieren.

Bei bekannten Werkzeugmaschinen ist es weiter von Nachteil, daß die Arbeitsventile und eventuelle weitere Vorsteuerventile getrennt an den Werkzeugmaschinen angeordnet werden müssen, so daß bei der Endmontage derartiger Werkzeugmaschinen ein großer Verkabelungsaufwand sowohl für die Pneumatik als auch für die Elektrik erforderlich ist.

Hiervon ausgehend ist es die Aufgabe der vorliegenden Erfindung, eine Werkzeugmaschine der eingangs genannten Art zu schaffen, bei der sich bei insgesamt kompakter Bauweise der Arbeitskolben während Stillstandszeiten zuverlässig so fixieren läßt, daß bei erneuter Inbetriebnahme keine Gefahrensituationen entstehen. Ferner soll ein verschleißarmer Betrieb möglich sein.

Erfindungsgemäß wird diese Aufgabe dadurch gelost, daß an dem Arbeitszylinder eine Verriegelungseinrichtung vorgesehen ist, die den Arbeitskolben bei Abfall eines Freigabedruckes in einer Sicherungsstellung mechanisch gehäusefest verriegelt und die konstruktiv so ausgebildet ist, daß sie den Arbeitskolben nachfolgend nur dann zur Bewegung wieder freigibt, wenn er keiner im Sinne eines Entfernens aus der Sicherungsstellung wirkenden Stellkraft ausgesetzt ist.

Die Verriegelungseinrichtung bewirkt im Bedarfsfalle, also bei Ausfall des Freigabedruckes, eine mechanische gehäusefeste Verriegelung des Arbeitskolbens in einer Sicherungsstellung, so daß letzterer daran gehindert wird, die einmal erreichte Hubendlage zu verlassen. Da die neuerliche Bewegungsfreigabe des Arbeitszylinders durch die Verriegelungseinrichtung einen im Sinne des Entfernens aus der Sicherheitsstellung entlasteten Arbeitskolben voraussetzt, ist gewährleistet, daß nicht durch einen sich unbeabsichtigt verlagernden Arbeitskolben Gefahrensituationen hervorgerufen werden.

Zwar gehen sowohl aus der DE-A-39 42 348 als auch aus der US-A-4 524 676 Arbeitszylinder hervor, die über eine durch Druckabfall eines Freigabedruckes aktivierte Verriegelungseineinrichtung für den Arbeitskolben verfügen. Allerdings hat dort eine Beaufschlagung des Arbeitskolbens im Sinne eines Entfernens aus der Sicherungslage stets auch eine Deaktivierung der Verriegelungseinrichtung zur Folge.

Vorteilhafte Ausgestaltungen der Erfindung gehen aus den Unteransprüchen hervor.

Wenn die Verriegelungseinrichtung in den Arbeitszylinder integriert ist und vorzugsweise der Freigabedruck ein Betriebsdruck des Arbeitszylinders ist, gestaltet sich die Endmontage der neuen Werkzeugmaschine sehr einfach. Es ist nämlich nur eine Druckmittelleitung zu der Antriebseinheit zuzuführen, über die sowohl der Betriebsdruck als auch der Freigabedruck für die Verriegelungseinrichtung geliefert wird. Fällt jetzt der Betriebsdruck und damit der Freigabedruck bei der neuen Werkzeugmaschine ab, so werden die sich in Hubendlage befindlichen Werkzeugwechsler mechanisch arretiert, so daß sie nicht absinken können. Dies bringt den Vorteil mit sich, daß beim Ausschalten der neuen Werkzeugmaschine oder bei Störungen in der Druckluftversorgung die Werkzeugwechsler nicht "absinken" können, was zu gefährlichen bzw. unübersichtlichen Betriebssituationen führen kann.

Die Verriegelung ist vorzugsweise nur dann wirksam, wenn der Arbeitszylinder sich außerhalb des Zustandes der Betriebsbereitschaft befindet, so daß während nur kurzer maschinenbedingter Betriebspausen keine Verriegelung erfolgen muß. Gewährleisten kann man dies durch ständige Bereitstellung eines ausreichend hohen Freigabedruckes, der das zweite querbewegliche Verriegelungsteil in einer Freigabestellung hält. Erst wenn der Freigabedruck unterhalb einen bestimmten, insbesondere voreinstellbaren Wert fällt, verlagert sich das zweite Verriegelungsteil automatisch unter Einwirkung der Verriegelungskraft in die Verriegelungsstellung, in der es mit dem kolbenfesten ersten Verriegelungsteil verriegelnd zusammenwirkt. Der Arbeitskolben ist dann im wesentlichen axial unbeweglich blockiert, eine erneute Inbetriebnahme ist erst dann möglich, wenn der Freigabedruck wieder die notwendige Höhe erreicht hat. Verschleißmindernd wirkt sich hier aus, daß der Verriegelungsmechanismus vom Druck in den Arbeitsräumen des Arbeitszylinders unabhängig ist, so daß während des bestimmungsgemäßen Betriebes des Arbeitszylinders in der Regel kein Eingriff der Verriegelungsteile stattfindet. Zweckmäßig ist es, als Freigabedruck den Betriebsdruck des Arbeitszylinders zu wählen und die zentrale Druckmittelzufuhr unmittelbar als Freigabedruck auf das zweite Verriegelungsteil zu schalten.

Ist der Arbeitszylinder als Antriebseinheit für den Werkzeugwechsler an einer Werkzeugmaschine vorgesehen, so ist er normalerweise so beschaltet, daß der Arbeitskolben im Moment der Inbetriebnahme in Richtung der eingefahrenen Stellung beaufschlagt wird, so daß er zunächst in die bereits angesprochene Hubendlage gezwungen wird. Nun kann es allerdings geschehen, daß im Rahmen von Servicearbeiten während des Betriebsstillstandes eine Umschaltung des zugeordneten Steuerventils stattgefunden hat, die von niemandem bemerkt wurde. Dies kann zur Folge haben, daß der Kolben bei der Inbetriebnahme des Arbeitszylinders sofort im Ausfahrsinne beaufschlagt wird. Eine rasch ausfahrende Kolbenstange könnte dann Beschädigungen an der Maschine oder Verletzungen des Personals hervorrufen. Damit auch in solchen Fällen die Betriebssicherheit gegeben ist, sind die an den beiden Verriegelungsteilen zum Eingriff miteinander vorgesehenen Verriegelungsmittel konstruktiv so ausgebildet, daß es dem Freigabedruck unmöglich ist, das zweite Verriegelungsteil aus der Verriegelungsstellung in die Freigabestellung zu verlagern, solange das die Blockierposition einnehmende erste Verriegelungsteil einer bestimmten, im Sinne einer axialen Entfernung des Arbeitskolbens aus der Hubendlage wirkenden Stellkraft ausgesetzt ist. Die genannte "bestimmte Stellkraft" wird beispielsweise in dem eben erwähnten Fall dadurch erzeugt, daß dem Arbeitskolben bei Inbetriebnahme unverzüglich der Bearbeitungsdruck im Ausfahrsinne aufgeschaltet wird. Ist dies der Fall, so verhindern die miteinander in Eingriff stehenden Verriegelungsmittel auf mechanische Weise, daß das zweite Verriegelungsteil die Verriegelungsstellung in Richtung der Freigabestellung verläßt, selbst wenn dieses unter dem Freigabedruck steht. Erst wenn die Beaufschlagung der Arbeitsräume wieder korrigiert wurde und der Arbeitskolben im Einfahrsinne beaufschlagt wird, gestatten die Verriegelungsmittel die Bewegungsfreigabe des Arbeitskolbens. Im Falle der DE 39 42 348 A1 erfolgt die Entriegelung automatisch zeitverzögert über das zum Antrieb des Arbeitskolbens zugeführte Druckmittel.

Die mit der Verriegelungseinrichtung ausgestattete Abschlußwand ist zweckmäßigerweise ein Gehäusedeckel des Arbeitszylinders, der sich bei mit einer Kolbenstange ausgestattetem Arbeitskolben zweckmäßigerweise auf der der Kolbenstange abgewandten Axialseite des Arbeitskolbens befindet. An diesem Zylinderdeckel ist vorzugsweise auch ein als Mehrwegeventil ausgebildetes Arbeitsventil angebracht, das für die Druckbeaufschlagung der Arbeitsräume des Arbeitszylinders verantwortlich ist. Es wird zweckmäßigerweise durch mindestens ein elektrisch betätigbares Vorsteuerventil, z.B. ein Magnetventil, angesteuert, das ebenfalls an dem Gehäusedeckel angebracht sein kann. Die gesamte Elektrik befindet sich zweckmäßigerweise in einem zentralen Installationsraum, der von einer abnehmbaren Schutzhaube abgedeckt sein kann. Die Druckluftverteilung zwischen den Vorsteuerventilen, dem Arbeitsventil und den Arbeitsräumen erfolgt bevorzugt durch im Innern des Zylindergehäuses ausgebildete Kanäle, so daß insgesamt eine äußerst integrale Baueinheit vorliegt. Unmittelbar an dem Zylinderdeckel kann auch ein Schalldämpfer und eine Anschlußeinrichtung für eine den Betriebsdruck führende Druckmittelleitung vorgesehen sein.

Der Arbeitszylinder ist zweckmäßigerweise pneumatisch betätigt. Damit werden lediglich zwei Anschlußleitungen benötigt, eine Druckmittelleitung für die Luftversorgung und ein insbesondere mehradriges Elektrokabel zur Ansteuerung der Vorsteuerventile und eventuell vorhandener Sensoren, die zur Erfassung der Kolbenposition eingesetzt werden.

Nachfolgend wird die Erfindung anhand der beiliegenden Zeichnung näher erläutert. In dieser zeigen:
- Figur 1: eine bevorzugte Ausführungsform des Arbeitszylinders im Längsschnitt,
- Figur 2: eine Rückansicht des Arbeitszylinders aus Figur 1 mit axialer Blickrichtung gemäß Pfeil II,
- Figur 3: einen vergrößerten Ausschnitt des Arbeitszylinders aus Figur 1 im Bereich des die Verriegelungseinrichtung aufweisenden Gehäusedeckels, wiederum im Längsschnitt, jedoch im Vergleich zur Figur 1 um 90° gedreht,
- Figur 4: ein vergrößertes Detail der in Figur 3 gezeigten Verriegelungseinrichtung, wobei sich das zweite Verriegelungsteil im Gegensatz zu der in Figur 3 eingenommenen Freigabestellung in der Verriegelungsstellung im Eingriff mit dem kolbenfesten ersten Verriegelungsteil befindet, und
- Figur 5: eine mit dem Arbeitszylinder ausgestattete Werkzeugmaschine.

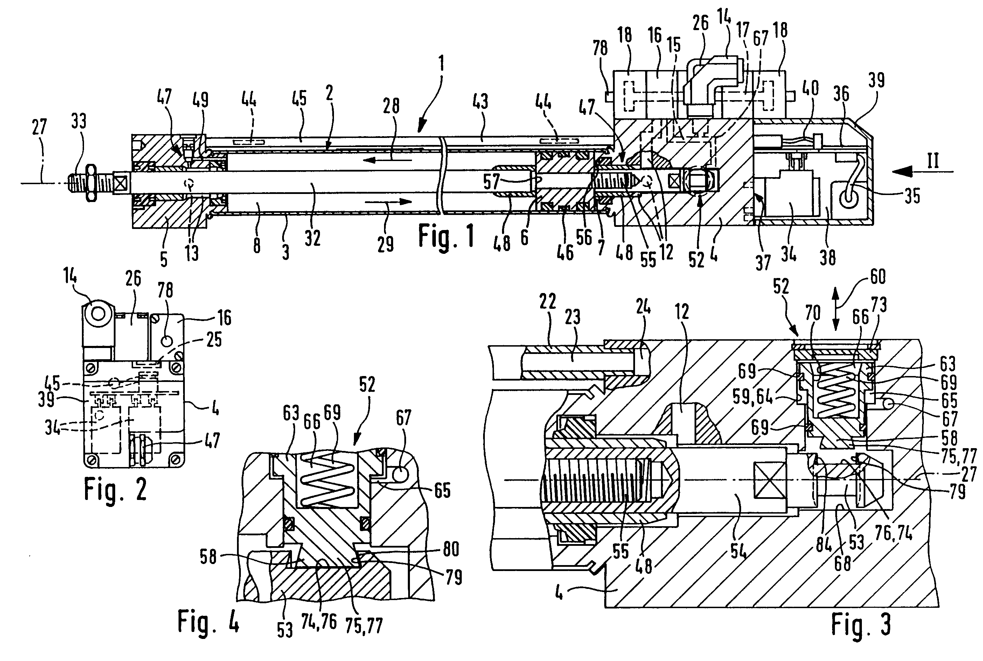

Die Figur 1 zeigt einen pneumatisch betätigbaren Arbeitszylinder 1, dessen Zylindergehäuse 2 einen mittleren rohrförmigen Gehäuseabschnitt 3 umfaßt, der an beiden Stirnseiten von je einer Abschlußwand in Gestalt eines Gehäusedeckels 4, 5 abgeschlossen ist. In dem rohrförmigen Gehäuseabschnitt 3 befindet sich ein axial beweglicher Arbeitskolben 6, der zwei Arbeitsräume 7, 8, dicht voneinander abteilt. In jeden Arbeitsraum 7, 8 mündet ein Druckmittelkanal 12, 13 des zugeordneten Gehäusedeckels 4, 5.

An dem in Figur 1 rechts gelegenen Gehäusedeckel 4 ist eine Anschlußeinrichtung 14 angebracht, über die sich eine z.B. schlauchförmige Druckmittelleitung anschließen läßt. Die Anschlußeinrichtung 14 kommuniziert mit einem in dem Gehäusedeckel 4 verlaufenden Versorgungskanal 15, der zu einem Arbeitsventil 16 führt, das ebenfalls an einer Außenfläche des Gehäusedeckels 4 lösbar festgelegt ist. Da derartige Arbeitsventile für sich gesehen bereits Stand der Technik und dem Fachmann geläufig sind, erübrigt sich an dieser Stelle eine eingehende Beschreibung. Es kann sich z.B. um ein 5/2-Wegeventil handeln, das einen Steuerschieber 17 enthält, der sich mittels geeigneter Betätigungseinrichtungen 18 des Arbeitsventils 16 in die gewünschte Position umschalten läßt. Je nach Schaltstellung kann über den Versorgungskanal 15 ankommendes Druckmittel in den einen oder anderen Druckmittelkanal 12, 13 strömen. Der zum zugeordneten Arbeitsraum 7 führende Druckmittelkanal 12 verläuft insbesondere vollständig im Innern des das Arbeitsventil 16 tragenden Gehäusedeckels 4. Die Verbindung zum Druckmittelkanal 13 des anderen Gehäusedeckels 5 erfolgt zweckmäßigerweise über einen Fluidkanal 23 in einer Stange 22, die sich parallel zu dem rohrförmigen Gehäuseabschnitt 3 neben diesem zwischen den beiden Gehäusedeckeln 4, 5 erstreckt. Dieser Fluidkanal 23 kommuniziert einerseits mit dem Druckmittelkanal 13 und andererseits mit einem Kanalabschnitt 24, der in dem Gehäusedeckel 4 die Verbindung zu dem Arbeitsventil 16 herstellt.

Das Arbeitsventil 16 kommuniziert ferner mit mindestens einem ebenfalls im Innern des Gehäusedeckels 4 verlaufenden Entlüftungskanal 25 (Figur 2), der in einen Schalldämpfer 26 mündet, der auch an dem Gehäusedeckel 5 befestigt ist. Zweckmäßigerweise befinden sich das Arbeitsventil 16, der Schalldämpfer 26 und die Anschlußeinrichtung 14 an einer gemeinsamen ebenen Montagefläche des Gehäusedeckels 4, deren Normalenvektor bezüglich der Längsachse 27 des Arbeitszylinders 1 im rechten Winkel verläuft.

Der Arbeitskolben 6 ist an einer Kolbenstange 32 befestigt, die sich axial erstreckt und den in Figur 1 links gelegenen Gehäusedeckel 5 zentral durchsetzt. Am außen liegenden Abschnitt der Kolbenstange 32 ist eine Befestigungseinrichtung 33 vorgesehen, an der sich ein zu bewegender Gegenstand lösbar befestigen läßt. Je nach Schaltstellung des Arbeitsventils 16 findet ein Ausfahrhub gemäß Pfeil 28 oder ein Einfahrhub gemäß Pfeil 29 statt.

Die Schaltstellung des Arbeitsventils 16 wird von den Betätigungseinrichtungen 18 beeinflußt, die über nicht näher dargestellte Kanäle im Innern des Gehäusedeckels 5 mit zwei elektrisch ansteuerbaren Vorsteuerventilen 34 kommunizieren, die ebenfalls an den Gehäusedeckel 4 und insbesondere an dessen dem rohrförmigen Gehäuseabschnitt 3 abgewandter Stirnseite 37 angebracht sind. Es handelt sich um Elektromagnetventile. Deren elektrische Signalversorgung erfolgt mittels Signalleitungen 35, die an eine elektrische Leiterplatte 30 angeschlossen sind, die in elektrischem Steckkontakt mit den Vorsteuerventilen 34 steht. Die elektrische Leiterplatte 36 ist wie die Vorsteuerventile 34 vorzugsweise in einem Installationsraum 38 untergebracht, der sich an der Stirnseite 37 an den Gehäusedeckel 4 anschließt und unter einer abnehmbaren Schutzhaube 39 liegt. In elektrischer Verbindung mit der Leiterplatte 36 können ferner noch weitere Signalleiter 40 stehen, die zu einer Sensoreinrichtung 43 gehören, mit der sich die Position des Arbeitskolbens 6 relativ zum Zylindergehäuse 2 erfassen läßt. Die Sensoreinrichtung 43 kann einen mit Sensoren 44 ausgestatteten Sensorstab 45 aufweisen, der in einer nicht näher gezeigten Aufnahmebohrung des Gehäusedeckels 4 festgelegt ist, durch die er sich hindurcherstreckt, um seitlich neben dem rohrförmigen Gehäuseabschnitt 3 zu liegen. Zur berührungslosen Betätigung der Sensoren 44 ist am Arbeitskolben 6 eine mitbewegte Dauermagnet-Anordnung 46 vorgesehen.

Sämtliche elektrische Anschlüsse und Verbindungen sind somit gut abgeschirmt in dem Installationsraum 38 untergebracht. Die Signalleitungen 35 münden zweckmäßigerweise in einer Elektrokupplung 47 an der Schutzhaube 39, an die von außen her nicht näher dargestellte Verbindungsleitungen anschließbar sind. Außer den elektrischen Anschlüssen befinden sich auch sämtliche fluidischen Anschlüsse im Bereich des einen, von der Kolbenstange 32 abgewandten Gehäusedeckels 4.

Der Arbeitszylinder ist desweiteren mit einer Dämpfungseinrichtung 47 zur fluidischen Endlagendämpfung des Arbeitskolbens 6 ausgestattet. Sie beruht auf dem an sich bekannten Prinzip, wonach die Mündungen der Druckmittelkanäle 12, 13 bei Annäherung des Arbeitskolbens 6 an die jeweils zugeordnete Hubendlage durch ein insbesondere kolben- oder hülsenförmiges Pufferungsteil 48 verschlossen werden, das in die Kanalmündung eintaucht. Das zuvor noch durch den unverschlossenen Druckmittelkanal ausströmende Fluid kann jetzt nur noch über einen parallelgeschalteten Drosselkanal 49 abströmen, der in der Zeichnung der Über-. sichtlichkeit wegen lediglich in dem kolbenstangenseitigen Gehäusedeckel 5 eingezeichnet ist. Da über den Drosselkanal 49 lediglich ein reduzierter Volumenstrom abströmen kann, wird der Arbeitskolben 6 sanft fluidisch abgebremst, so daß er nurmehr mit geringer Intensität in der Hubendlage am jeweiligen Gehäusedeckel 4, 5 anschlägt.

Zusätzlich zu den bisherigen Ausstattungsdetails verfügt der Arbeitszylinder 1 vorzugsweise über eine Verriegelungseinrichtung 52 zur lösbaren mechanischen gehäusefesten Verriegelung des Arbeitskolbens 6 in einer Sicherungsstellung in mindestens einer Hubendlage. Ihr Aufbau ergibt sich insbesondere aus den Figuren 3 und 4, wobei sie beispielsgemäß lediglich zur Arretierung einer Hubendlage dient, und zwar derjenigen, die der Arbeitskolben 6 im eingefahrenen Zustand einnimmt, indem er an dem in Figur 1 rechts gelegenen Gehäusedeckel 4 anliegt.

Zur Verriegelungseinrichtung 52 gehört zunächst ein erstes kolbenfestes Verriegelungsteil 53. Es befindet sich auf der dem einfahrseitigen Gehäusedeckel 4 zugewandten Axialseite des Arbeitskolbens 6 und ist mitbewegbar mit diesem verbunden und beispielsgemäß vom freien Endabschnitt eines Stangen- oder bolzenartigen Teils 54 gebildet, das auf das im Innern des rohrförmigen Gehäuseabschnittes 3 liegende freie Ende 55 der Kolbenstange 32 aufgeschraubt ist. Das bolzenartige Teil 54 dient hier zugleich als Befestigungsmittel für den Arbeitskolben 6, der auf einem Abschnitt des freien Endes 55 axial zwischen dem bolzenartigen Teil und einer Abstufung 57 der Kolbenstange 32 sitzt. Außerdem kann das bolzenartige Teil 54 als Träger für das zugeordnete Pufferungsteil 48 dienen, das zweckmäßigerweise in einer ringartigen Vertiefung gehalten wird, die sich zwischen dem bolzenartigen Teil 54 und der zugewandten Axialseite 56 des Arbeitskolbens 6 befindet.

Ein gehäusefestes zweites Verriegelungsteil 58 der Verriegelungseinrichtung 52 ist in einer rechtwinkelig zur Längsachse 27 verlaufenden Querbohrung 59 des Gehäusedeckels 4 aufgenommen. Es ist in Längsrichtung dieser Querbohrung 59 gemäß Doppelpfeil 60 zwischen der in Figur 3 gezeigten Freigabestellung und der in Figur 4 gezeigten Verriegelungsstellung hin und her bewegbar. In der Verriegelungsstellung steht es im Eingriff mit dem ersten Verriegelungsteil 53, wenn dieses die in Figuren 3 und 4 gezeigte Blockierposition einnimmt, bei der sich der Arbeitskolben 6 in der zugeordneten Hubendlage befindet. In der Verriegelungsstellung sind der Arbeitskolben 6 und die Kolbenstange 32 durch den Eingriff der beiden Verriegelungsteile 53, 58 mechanisch daran gehindert, einen Ausfahrhub vorzunehmen. In der Freigabestellung hingegen ist eine entsprechende Axialbewegung der genannten Teile ohne weiteres möglich.

Das zweite Verriegelungsteil 58 ist z.B. einstückig mit einem Verriegelungskolben 63 verbunden, der ebenfalls in der Querbohrung 59 längsbeweglich geführt ist. Da sein Durchmesser größer ist als derjenige des zweiten Verriegelungsteils 58, befindet er sich in einem erweiterten Bohrungsabschnitt 64 auf der dem ersten Verriegelungsteil 53 abgewandten Außenseite des zweiten Verriegelungsteils 58. In dem erweiterten Bohrungsabschnitt 64 teilt der Verriegelungskolben 63 zwei Beaufschlagungsräume 65, 66 voneinander ab. Der dem ersten Verriegelungsteil 53 zugewandte innere Beaufschlagungsraum 65 kommuniziert über einen Druckmittelkanal 67 mit der Anschlußeinrichtung 14. Der Druckmittelkanal 67 verläuft zweckmäßigerweise im Innern des Gehäusedeckels 4 und kann in den Versorgungskanal 15 einmünden. Wird dem Arbeitszylinder 1 im Betrieb über die Anschlußeinrichtung 14 unter einem bestimmten Betriebsdruck stehendes Druckmittel zugeführt, so steht dieser Betriebsdruck über den Druckmittelkanal 67 automatisch auch in dem inneren Beaufschlagungsraum 65 an, und zwar in voller Höhe und unabhängig davon, in welcher Schaltstellung sich das Arbeitsventil 16 befindet. Dieser Betriebsdruck bildet einen Freigabedruck, der das zweite Verriegelungsteil 58 über den Verriegelungskolben 63 in Richtung der Freigabestellung fluidisch beaufschlagt und ständig in der Freigabestellung hält.

Um eine Leckage auszuschließen, ist der innere Beaufschlagungsraum 65 sowohl zum äußeren Beaufschlagungsraum 66 als auch zu der Aufnahmeöffnung 68 des Gehäusedeckels 4 hin, die das erste Verriegelungsteil 53 in der Blockierstellung aufnimmt, abgedichtet. Die Aufnahmeöffnung 68 ist beispielsgemäß eine sacklochähnliche Axialvertiefung, in die das bolzenartige Teil 54 in der zugeordneten Hubendlage zumindest größtenteils eintaucht und deren dem Arbeitsraum 7 zugewandte Mündung die Mündung des Druckmittelkanals 12 bildet.

Als Maßnahme zur genannten Abdichtung ist beispielsgemäß sowohl am zweiten Verriegelungsteil 58 als auch am Verriegelungskolben 63 ein Dichtring 69 vorgesehen, der mit der zugeordneten Wandung der Querbohrung 59 dichtend zusammenarbeitet, ohne die Querbewegung gemäß Pfeil 60 zu behindern.

In dem äußeren Beaufschlagungsraum 66 ist eine mechanische Druckfederanordnung 69 vorgesehen. Sie stützt sich beispielsgemäß einerseits am Boden einer Zentralausnehmung 70 des Verriegelungskolbens 63 und/oder des zweiten Verriegelungsteils 58 ab, während sie andererseits gegen einen Verschlußdeckel 73 arbeitet, der die Querbohrung 59 im Bereich der Außenseite des Gehäusedeckels 4 lösbar verschließt.

Anstelle einer mechanischen Feder könnte auch eine Gasfeder vorgesehen sein. Jedenfalls liefert die jeweilige Federanordnung eine elastisch nachgiebige Verriegelungskraft, die das zweite Verriegelungsteil 58 in Richtung der Verriegelungsstellung gemäß Figur 4 ständig unter Vorspannung hält.

Wenn sich der Arbeitszylinder 1 im Zustand der Betriebsbereitschaft befindet, steht an dem Versorgungskanal 15 der Betriebsdruck an , der über den Druckmittelkanal 67 auch in dem inneren Beaufschlagungsraum 65 wirkt und das zweite Verriegelungsteil 58 ständig in der in Figur 3 gezeigten Freigabestellung hält. Die Stellung des zweiten Verriegelungsteils 58 hängt also nicht von der Stellung des Arbeitskolbens 6 und/oder von den in den Arbeitsräumen 7, 8 herrschenden Arbeitsdrücken ab. Die Beaufschlagungsfläche des Verriegelungskolbens 63 ist so auf den Betriebsdruck abgestimmt, daß die resultierenden, in Richtung der Freigabestellung wirkenden Kräfte auf jeden Fall größer sind als die Verriegelungskraft der fluidischen oder mechanischen Federanordnung 69. Erst wenn der Betriebsdruck einen gewissen Wert unterschreitet, was beispielsweise bei einer längeren Stillsetzung des Arbeitszylinders über Nacht und an den Wochenenden auftreten kann, vermag die Verriegelungskraft die Freigabekraft zu überwinden und das zweite Verriegelungsteil 58 in die Verriegelungsstellung zu verbringen. Es liegt also eine wegen der geringeren Ansprechhäufigkeit äußerst verschleißarme und höchsten Sicherheitsanforderungen genügende Verriegelungseinrichtung vor. Anstelle des Betriebsdruckes kann dem inneren Beaufschlagungsraum 65 auch ein anderer Freigabedruck als Referenzdruck aufgeschaltet werden, man kann sich hier an den jeweiligen Einsatzbedingungen orientieren.

An jedem Verriegelungsteil 53, 58 ist mindestens ein Verriegelungsmittel 74, 75 vorgesehen, die in der Verriegelungsstellung gemäß Figur 4 ineinander eingreifen. Als Verriegelungsmittel 74 des ersten Verriegelungsteils 53 ist zweckmäßigerweise eine Vertiefung 76 vorgesehen, die insbesondere nach Art einer Ringnut ausgebildet ist, welche sich koaxial zu der Kolbenstange 32 erstreckt. Dies hat den Vorteil, daß auch ohne Verdrehsicherungsmaßnahmen seitens des ersten Verriegelungsteils 53 stets gewährleistet ist, daß sich die Vertiefung 76 in der Blockierposition in einer Flucht gemäß Bewegungsrichtung 60 mit dem Verriegelungsmittel 75 des zweiten Verriegelungsteils 58 befindet. Bei dem letztgenannten Verriegelungsmittel 75 handelt es sich vorzugsweise um einen bezüglich der Längsachse 27 radial nach innen weisenden Vorsprung 77, der in der Blockierposition des ersten Verriegelungsteils 53 ungehindert bezüglich der Vertiefung 76 aus- und einfahren kann.

In der Verriegelungsstellung ragt der Vorsprung 77 in die Vertiefung 76 hinein, so daß sich diese Verriegelungsmittel 74, 75 in Längsrichtung 27 hintergreifen. Es stellt sich somit eine formschlüssige und äußerst sichere Arretierung in Längsrichtung 27 ein.

Sobald der im inneren Beaufschlagungsraum 65 herrschende Druck wieder auf den beim Ausführungsbeispiel vom Betriebsdruck gebildeten Freigabedruck angestiegen ist, wird die Verriegelung automatisch gelöst und die aus Kolbenstange 32, Kolben 6 und erstem Verriegelungsteil 53 bestehende Bewegungseinheit zur erneuten Hubbewegung freigegeben.

Ein weiteres Sicherheitsmerkmal zeichnet die beispielsgemäße Verriegelungseinrichtung 52 aus. Demnach ist vorgesehen, daß die beiden Verriegelungsmittel 74, 75 konstruktiv so ausgebildet sind, daß der z.B. vom Betriebsdruck gebildete Freigabedruck nicht in der Lage ist, das zweite Verriegelungsteil 58 aus der Verriegelungsstellung in die Freigabestellung zu verlagern, so lange das die Blockierposition einnehmende erste Verriegelungsteil 53 einer bestimmten, in Richtung des Ausfahrhubes 28 wirkenden Stellkraft unterliegt. Erzielt wird dies beispielsgemäß dadurch, daß die Verriegelungsmittel 74, 75 so ausgebildet sind, daß sie einander in Verstellrichtung 60 des zweiten Verriegelungsteils 58 formschlüssig hintergreifen können.

Vor allem wenn der Arbeitszylinder 1 mit nach unten ragender Kolbenstange eingesetzt wird und die Grundstellung bei eingefahrener Kolbenstange vorliegt, wird man eine Ansteuerung des Arbeitskolbens 6 derart bevorzugen, daß bei jeder neuerlichen Inbetriebnahme zunächst der kolbenstangenseitige Arbeitsraum 8 mit Arbeitsdruck versorgt wird. Man verhindert damit, daß die Kolbenstange im Moment der Inbetriebnahme schlagartig ausfährt, was zu schweren Verletzungen und/oder Beschädigungen führen könnte. Die entsprechende Ansteuerung wird über die Schaltstellung des Arbeitsventils 16 verwirklicht.

Es kann nun der Fall eintreten, daß während einer Betriebspause insbesondere zu Servicezwecken eine vorübergehende Handsteuerung des Arbeitszylinders 1 vorgenommen wird, beispielsweise durch eine manuelle Betätigung des Arbeitsventils 16, das zu diesem Zweck eine Handhilfsbetätigung 78 aufweist. Als Folge besteht die Möglichkeit, daß das Arbeitsventil 16 nach Abschluß der Servicearbeiten in einer irregulären Stellung verbleibt, in der bei Inbetriebnahme nicht dem kolbenstangenseitigen, sondern dem entgegengesetzten Arbeitsraum 8 Druck zugeführt wird. Ohne die erwähnten besonderen konstruktiven Maßnahmen würde der Betriebsdruck die Verriegelungseinrichtung öffnen und die Kolbenstange 32 schlagartig ausfahren.

Auf Grund der erläuterten Ausgestaltung der Verriegelungsmittel 74, 75 ist das zweite Verriegelungsteil 58 nicht in der Lage, die Verriegelungsstellung zu verlassen, so lange das in Blockierposition befindliche erste Verriegelungsteil 53 im Ausfahrsinne gemäß Pfeil 28 vorgespannt ist. Die formschlüssige Verankerung des zweiten gegenüber dem ersten Verriegelungsteil wirkt dem Freigabedruck mechanisch entgegen. Erst nachdem die Ansteuerung korrigiert wurde und der Arbeitszylinder 6 wieder im Einfahrsinne gemäß Pfeil 29 beaufschlagt wird, gestattet das erste Verriegelungsteil 53 die Freigabe des zweiten Verriegelungsteils 58 und dessen Verlagerung in die Freigabestellung.

Im konkreten Fall des Ausführungsbeispiels erreicht man die betreffende Gestaltung der Verriegelungsmittel 74, 75, dadurch, daß die Vertiefung 76 an der vom Arbeitskolben 6 abgewandten Axialseite von einer ersten Verriegelungsfläche 79 begrenzt ist, die mindestens einen Flächenabschnitt aufweist, der im Vergleich zu einem in Bewegungsrichtung 60 weniger tiefliegenden Flächenabschnitt weiter vom Arbeitskolben 6 entfernt ist. Diese Bedingung wird erfüllt, wenn die erste Verriegelungsfläche 79 im Längsschnitt durch das erste Verriegelungsteil 53 gesehen eine Schrägfläche ist. Im Falle einer umlaufenden Ringvertiefung hat die erste Vertiefungsfläche 79 zweckmäßigerweise die Gestalt der inneren Mantelfläche eines hohlen Kegelstumpfes. An dem Vorsprung 77 befindet sich eine zweite Verriegelungsfläche 80, die im Längsschnitt gesehen komplementär zu der ersten Verriegelungsfläche 79 gestaltet ist, so daß die beiden Verriegelungsflächen 79, 80 in der Lage sind, in der in Figur 4 gezeigten Verriegelungsstellung entlang jeweils eines Umfangsabschnittes aneinander anzuliegen.

Zweckmäßigerweise ist vorgesehen, daß das in Blockierposition befindliche erste Verriegelungsteil 53 bei in Verriegelungsstellung befindlichem zweiten Verriegelungsteil 58 über ein gewisses axiales Bewegungsspiel in Richtung der Längsachse 27 verfügt. Wenn der Arbeitskolben 6 seine Hubendlage einnimmt, kann der mit der geneigten zweiten Verriegelungsfläche 80 ausgestattete Vorsprung 77 problemlos in die und aus der Verriegelungsstellung verfahren werden. In der Verriegelungsstellung liegen die beiden Verriegelungsflächen 79, 80 nicht oder zumindest nicht mit großer Kraft aneinander an. Sobald jedoch eine irreguläre Betriebsweise der oben genannten Art auftritt, kann sich das erste Verriegelungsteil 53 bei in Eingriff stehendem zweiten Verriegelungsteil 58 auf Grund des Bewegungsspiels ein Stück weit in Ausfahrrichtung 28 verlagern, so daß die beiden Verriegelungsflächen 79, 80 fest gegeneinandergepreßt werden, wie dies aus Figur 4 hervorgeht. Der Bewegungsspielraum ist minimal, er kann im Millimeter-Bereich oder im Zehntel-Millimeter-Bereich liegen.

Beispielsgemäß hat die zweite Verriegelungsfläche 80 des Vorsprunges 77 eine Gestalt entsprechend der Außenmantelfläche eines Kegelstumpfes, dessen Längsachse mit der Bewegungsrichtung 60 zusammenfällt. Der Axialbereich größeren Durchmessers ist der Aufnahmeöffnung 68 zugewandt, die von der Querbohrung 59 getroffen wird. Auf Grund der rotationssymmetrischen Ausgestaltung erübrigt sich eine Verdrehsicherung des ersten Verriegelungsteils 53.

Zweckmäßig ist es, die bei nutartiger Ausgestaltung der ersten Verriegelungsfläche 79 axial gegenüberliegende und näher zum Arbeitskolben 6 angeordnete Vertiefungsflanke 84 mit einer der ersten Verriegelungsfläche 79 entsprechenden Kontur zu versehen. Bei einem Längsschnitt mit radial und bezüglich der jeweiligen Bewegungsrichtung axial ausgerichteter Schnittebene können somit sowohl die Vertiefung 76 als auch der Vorsprung 77 eine schwalbenschwanzähnliche Gestaltgebung aufweisen.

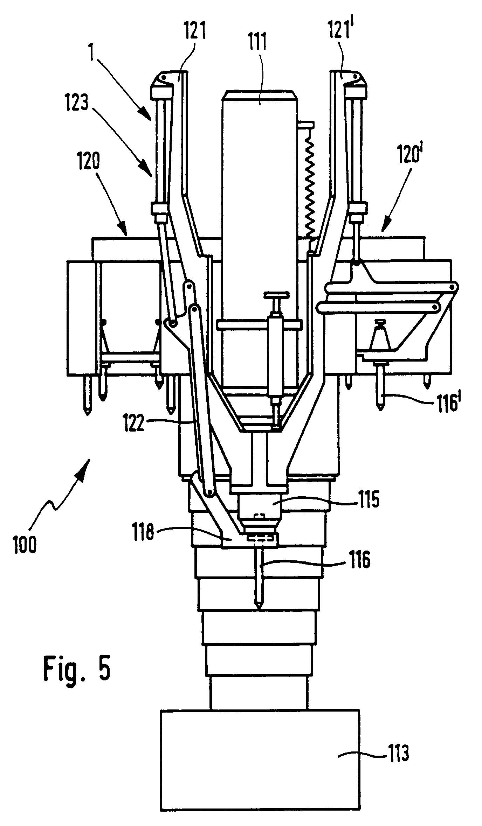

Der Arbeitszylinder 1 läßt sich vielfältig einsetzen. Ein bevorzugter, jedoch nicht ausschließlicher Anwendungsfall ist sein Einsatz als Antriebseinheit für den Werkzeugwechsler einer Werkzeugmaschine. In Figur 5 ist dieser Anwendungsfall in einer bevorzugten Ausgestaltung näher illustriert. Im einzelnen ist dort mit 100 eine Werkzeugmaschine mit einem Spindelstock 111 gezeigt, der auf einem Sockel 113 angeordnet ist. In einen Spindelkopf 115 ist ein Bearbeitungswerkzeug 116 eingesetzt, das von einem Halter 118 eines insgesamt mit 120 bezeichneten Werkzeugwechslers gehalten ist. Der Werkzeugwechsler 120 weist ein starres Teil 121 auf, an dem gelenkig ein Parallelogrammgestänge 122 befestigt ist, das wiederum den Halter 118 trägt. Zwischen dem starren Teil 121 und dem Parallelogrammgestänge 122 ist als Antriebseinheit 123 der im Zusammenhang mit den Figuren 1 bis 4 bereits näher beschriebene Arbeitszylinder 1 angeordnet.

Wenn sich die Antriebseinheit 123 im ausgefahrenen Zustand befindet, wie dies in Figur 5 links gezeigt ist, so befindet sich das Bearbeitungswerkzeug 116 in seiner Arbeitsposition. Der Werkzeugmaschine 100 ist zumindest ein weiterer Werkzeugwechsler 120' zugeordnet, der in Figur 5 rechts dargestellt ist und ein Bearbeitungswerkzeug 116' trägt, das sich in seiner Magazinposition befindet.

Wegen der Integration der in Figur 5 nicht gezeigten Verriegelungseinheit 52 in den Arbeitszylinder 1 ist zum einen eine sehr kompakte Bauweise geschaffen, die eine leichte Montage der Werkzeugmaschine 100 ermöglicht. Zusätzliche externe Bauelemente zur Fixierung der Arbeitskolbenposition sind nämlich nicht erforderlich, denn bei Abfall des Freigabedruckes sorgt die integrierte Verriegelungseinheit 52 dafür, daß der Werkzeugwechsler 120' in seiner in Figur 5 rechts gezeigten oberen Endlageposition verbleibt. Dies hat die eingangs bereits ausführlich erläuterten Sicherheitsvorteile.

## Patentansprüche

1. Werkzeugmaschine mit einem Spindelstock (111) und zumindest einem Werkzeugwechsler (120), der Bearbeitungswerkzeuge (116) zwischen einer Magazinposition und einer Arbeitsposition transportiert, wobei dem Werkzeugwechsler (120) als Antriebseinheit (123) zumindest ein fluidisch betätigbarer Arbeitszylinder (1) mit einem Zylindergehäuse (2) zugeordnet ist, in dem ein Arbeitskolben (6) axial bewegbar angeordnet ist, dadurch gekennzeichnet, daß an dem Arbeitszylinder (1) eine Verriegelungseinrichtung (52) vorgesehen ist, die den Arbeitskolben (6) bei Abfall eines Freigabedruckes in einer Sicherungsstellung mechanisch gehäusefest verriegelt und die konstruktiv so ausgebildet ist, daß sie den Arbeitskolben (6) nachfolgend nur dann zur Bewegung wieder freigibt, wenn er keiner im Sinne eines Entfernens aus seiner Sicherungsstellung wirkenden Stellkraft ausgesetzt ist.

2. Werkzeugmaschine nach Anspruch 1, dadurch gekennzeichnet, daß der Freigabedruck ein Betriebsdruck des Arbeitszylinders (1) ist.

3. Werkzeugmaschine nach Anspruch 1 oder 2, dadurch gekennzeichnet, daß die Verriegelungseinrichtung (52) in den Arbeitszylinder (1) integriert ist.

4. Werkzeugmaschine nach einem der Ansprüche 1 bis 3, dadurch gekennzeichnet, daß die Verriegelungseinrichtung (52) einer stirnseitigen Abschlußwand (4) des Zylindergehäuses (2) zugeordnet ist und zur lösbaren mechanischen gehäusefesten Verriegelung des Arbeitskolbens (6) in einer an die Abschlußwand (4) angenäherten Hubendlage dient.

5. Werkzeugmaschine nach einem der Ansprüche 1 bis 4, dadurch gekennzeichnet, daß die Verriegelungseinrichtung (52) ein erstes Verriegelungsteil (53) aufweist, das auf der der Abschlußwand (4) zugewandten Seite des Arbeitskolbens (6) angeordnet und mitbewegbar mit diesem verbunden ist, daß die Verriegelungseinrichtung (52) ein in oder an der Abschlußwand (4) angeordnetes zweites Verriegelungsteil (58) aufweist, das quer zur Hubrichtung (28, 29) des Arbeitskolbens (6) zwischen einer Verriegelungsstellung und einer Freigabestellung bewegbar ist, wobei es in der Verriegelungsstellung bei die Hubendlage einnehmendem Arbeitskolben (6) in Eingriff mit dem sich dabei in einer Blockierposition befindlichen ersten Verriegelungsteil (53) steht, und wobei es in der Freigabestellung zur Ermöglichung der axialen Hubbewegung des Arbeitskolbens (6) außer Eingriff mit dem ersten Verriegelungsteil (53) steht, daß das zweite Verriegelungsteil (58) im Zustand der Betriebsbereitschaft des Arbeitszylinders (1) unter einem es in Richtung der Freigabestellung beaufschlagenden Fluiddruck (Freigabedruck) steht, der in der Lage ist, das zweite Verriegelungsteil (58) entgegen einer dieses in Richtung der Verriegelungsstellung vorspannenden Verriegelungskraft während der Betriebsbereitschaft ständig in der Freigabestellung zu halten, und daß die an den beiden Verriegelungsteilen (53, 58) zum Eingriff miteinander vorgesehenen Verriegelungsmittel konstruktiv so ausgebildet sind, daß es dem Freigabedruck unmöglich ist, das zweite Verriegelungsteil (58) aus der Verriegelungsstellung in die Freigabestellung zu verlagern, solange das die Blockierposition einnehmende erste Verriegelungsteil (53) einer bestimmten Stellkraft ausgesetzt ist, die im Sinne einer axialen Entfernung des Arbeitskolbens (6) aus der Hubendlage wirkt.

6. Werkzeugmaschine nach Anspruch 5, dadurch gekennzeichnet, daß als das zweite Verriegelungsteil (58) beaufschlagender Freigabedruck der Betriebsdruck des Arbeitszylinders (1) vorgesehen ist.

7. Werkzeugmaschine nach Anspruch 5 oder 6, dadurch gekennzeichnet, daß am Zylindergehäuse (2) insbesondere an der Abschlußwand (4) eine Anschlußeinrichtung (14) für eine den Betriebsdruck führende Druckmittelleitungen vorgesehen ist, die mit einem im Inneren des Zylindergehäuses (2) vorgesehenen Druckmittelkanal (67) kommuniziert, der zu dem zweiten Verriegelungsteil (58) führt.

8. Werkzeugmaschine nach einem der Ansprüche 5 bis 7, dadurch gekennzeichnet, daß das zweite Verriegelungsteil (58) mittels einer Federkraft (69) in Richtung der Verriegelungsstellung vorgespannt ist, die zweckmäßigerweise von einer mechanischen Druckfederanordnung gebildet ist.

9. Werkzeugmaschine nach einem der Ansprüche 5 bis 8, dadurch gekennzeichnet, daß das zweite Verriegelungsteil (58) mit einem Verriegelungskolben (63) in Mitnahmeverbindung steht, der einerseits von dem in Richtung der Freigabestellung wirkenden Freigabedruck beaufschlagbar ist.

10. Werkzeugmaschine nach einem der Ansprüche 4 bis 9, dadurch gekennzeichnet, daß der Freigabedruck unabhängig von dem Arbeitsdruck ist, der in dem sich an die Abschlußwand (4) anschließenden Arbeitsraum (7) des Arbeitszylinders (1) herrscht.

11. Werkzeugmaschine nach einem der Ansprüche 5 bis 10, dadurch gekennzeichnet, daß die Verriegelungsmittel (74, 75) der beiden Verriegelungsteile (53, 58) so ausgebildet sind, daß sie einander in Verstellrichtung (60) des zweiten Verriegelungsteils (58) formschlüssig hintergreifen können.

12. Werkzeugmaschine nach einem der Ansprüche 5 bis 11, dadurch gekennzeichnet, daß das Verriegelungsmittel (74) des ersten Verriegelungsteils (53) von einer Vertiefung (76) gebildet ist, in die das als Vorsprung (77) ausgebildete Verriegelungsmittel (75) des zweiten Verriegelungsteils (58) quer zur Hubrichtung (28, 29) des Arbeitskolbens (6) eintauchen kann.

13. Werkzeugmaschine nach Anspruch 12, dadurch gekennzeichnet, daß die Vertiefung (76) an der vom Arbeitskolben (6) abgewandten Axialseite von einer ersten Verriegelungsfläche (79) begrenzt ist, die mindestens einen Flächenabschnitt aufweist, der im Vergleich zu einem quer zur Hubrichtung (28, 29) des Arbeitskolbens (6) weniger tiefliegenden Flächenabschnitt weiter vom Arbeitskolben (6) entfernt ist, und daß der Vorsprung (77) eine zugeordnete und zweckmäßigerweise im wesentlichen komplementäre zweite Verriegelungsfläche (80) aufweist, die in der Verriegelungsstellung neben der ersten Verriegelungsfläche (79) zu liegen kommt, wobei das in Blockierposition befindliche erste Verriegelungsteil (53) bezüglich des in Verriegelungsstellung befindlichen zweiten Verriegelungsteils (58) in Hubrichtung (28, 29) des Arbeitskolbens (6) mit Bewegungsspiel versehen ist.

14. Werkzeugmaschine nach Anspruch 12 oder 13, dadurch gekennzeichnet, daß die Vertiefung (76) nach Art einer Ringnut ausgebildet ist.

15. Werkzeugmaschine nach einem der Ansprüche 5 bis 14, dadurch gekennzeichnet, daß das erste Verriegelungsteil (53) an einem bolzenartigen Teil (54) vorgesehen ist, das eine Pufferhülse (48) tragen kann, die zu einer Dämpfungseinrichtung (47) zur Endlagendämpfung des Arbeitskolbens (6) gehört, die ebenfalls in oder an der Abschlußwand (4) vorgesehen ist.

16. Werkzeugmaschine nach einem der Ansprüche 4 bis 15, dadurch gekennzeichnet, daß die Abschlußwand (4) von einem Gehäusedeckel des Arbeitszylinders (1) gebildet ist, der sich auf der einer mit dem Arbeitskolben (6) verbundenen Kolbenstange (32) abgewandten Kolbenseite (56) befindet.

17. Werkzeugmaschine nach einem der Ansprüche 4 bis 16, dadurch gekennzeichnet, daß an der Abschlußwand (4) mindestens ein zur fluidischen Ansteuerung der Arbeitsräume (7, 8) des Arbeitszylinders (1) vorgesehenes Arbeitsventil (16) vorgesehen ist.

18. Werkzeugmaschine nach einem der Ansprüche 4 bis 17, dadurch gekennzeichnet, daß an der vom Arbeitskolben (6) abgewandten Stirnseite (37) der Abschlußwand (4) ein insbesondere durch eine abnehmbare Schutzhaube (39) verschlossener Installationsraum (38) vorgesehen ist, der beispielsweise elektrisch betätigbare Vorsteuerventile (34) und/oder sonstige elektrische und/oder elektronische Bauteile (36, 40) aufweisen kann, die zur Ansteuerung des Arbeitszylinders (1) beitragen.

19. Werkzeugmaschine nach einem der Ansprüche 4 bis 18, dadurch gekennzeichnet, daß eine Sensoreinrichtung (43) zur Erfassung der Position des Arbeitskolbens (6) vorgesehen ist, die an der Abschlußwand (4) festgelegt sein kann und die elektrische Signalleitungen (40) aufweist, die insbesondere in den gegebenenfalls vorhandenen Installationsraum (38) geführt sind, wo sie an eine elektrische Leiterplatte (36) angeschlossen sein können.

## Claims

1. Machine tool with a headstock (111) and one or more tool changers (120) for transferring machining tools between a magazine position and a working position, wherein the tool changer (120) is assigned as drive unit (123) one or more fluid-actuable operating cylinders (1) with a cylinder housing (2) in which an operating piston (6) is mounted with axial movement facility, characterized in that there is provided on the operating cylinder (1) a locking device (52) which, in the event of a decrease on release pressure, locks the operating piston (6) in a safe position mechanically fixed to the casing, and which is so designed that it subsequently releases the operating piston (6) for movement only when it is no longer subject to any actuating force acting such as to move it from its safe position.

2. Machine tool according to claim 1, characterized in that the release pressure is an operating pressure of the operating cylinder (1).

3. Machine tool according to claim 1 or 2, characterized in that the locking device (52) is integrated in the operating cylinder (1).

4. Machine tool according to any of claims 1 to 3, characterized in that the locking device (52) is assigned to an end sealing wall (4) of the cylinder casing (2) and serves to lock the operating piston (6) securely to the casing, mechanically releasable, in an end-of-stroke position close to the sealing wall (4).

5. Machine tool according to any of claims 1 to 4, characterized in that the locking device (52) has a first locking section (53) located on the side of the operating piston (6) facing the sealing wall (4) and connected to the operating piston so as to be capable of moving along with it, that the locking device (52) has a second locking section (58) located in or on the sealing wall (4) and moveable at right-angles to the direction of stroke (28, 29) of the operating piston (6) between a locked position and a release position wherein, in the locked position when the operating piston (6) assumes the end-of-stroke position, it engages with the first locking section (53) which is at the same time in a locking position, and wherein - in the release position - it is disengaged from the first locking section (53) so as to permit the axial stroke of the operating piston (6), that the second locking section (58), when the operating cylinder (1) is in a state of operational readiness, is under a fluid pressure (release pressure) pushing it in the direction of the release position, which is capable of holding the second locking section (58) during operational readiness constantly in the release position against a locking force prestressing it in the direction of the locked position, and that it is impossible for the release pressure to shift the second locking section (58) from the locked position into the release position, so long as the first locking section (53) assuming the locking position is subject to a certain actuating force, is acting towards axial removal of the operating piston (6) from the end-of-stroke position.

6. Machine tool according to claim 5, characterized in that the operating pressure of the operating cylinder (1) is provided as the release pressure acting on the second locking section (58).

7. Machine tool according to claim 5 or 6, characterized in that, provided on the cylinder casing (2) and in particular on the sealing wall (4), is a connection device (14) for a pressure medium line supplying the operating pressure, which communicates with a pressure medium duct inside the cylinder casing (2) which leads to the second locking section (58).

8. Machine tool according to any of claims 5 to 7, characterized in that the second locking section (58) is prestressed in the direction of the locked position by means of a spring force, expediently provided by a mechanical compression spring assembly.

9. Machine tool according to any of claims 5 to 8, characterized in that the second locking section (58) is in driving connection with a locking piston (63), which can be acted upon at one end by the release pressure acting in the direction of the release position.

10. Machine tool according to any of claims 4 to 9, characterized in that the release pressure is independent of the operating pressure which prevails in the working space (7) of the operating cylinder (1) adjacent to the sealing wall (4).

11. Machine tool according to any of claims 5 to 10, characterized in that the locking elements (74, 75) of the two locking sections (53, 58) are so designed as to be capable of engaging positively from behind in the direction of adjustment (60) of the second locking section (58).

12. Machine tool according to any of claims 5 to 11, characterized in that the locking element (74) of the first locking section (53) is formed by a recess (76), into which the locking element (75) of the second locking section (58) can dip at right-angles to the direction of stroke (28, 29) of the operating piston (6).

13. Machine tool according to claim 12, characterized in that the recess (76) is bounded, on the axial side facing away from the operating piston (6), by a first locking face (79) with one or more face sections and which is further removed from the operating piston (6) than a less deeply-lying face section at right-angles to the direction of stroke of the operating piston (6), and that the projection (77) has an assigned and expediently essentially complementary second locking face (80), which comes to lie in the locked position next to the first locking face (79), wherein the first locking section (53) in the locking position is provided with movement play, in the direction of stroke (28, 29) of the operating piston (6), relative to the second locking section (58) in the locked position.

14. Machine tool according to claim 12 or 13, characterized in that the recess (76) is in the form of an annular groove.

15. Machine tool according to any of claims 5 to 14, characterized in that the first locking section (53) is provided on a pin-like part (54) which may carry a buffer sleeve (48) belonging to a damping device (47) for end-position damping of the operating piston (6), which is similarly provided in or on the sealing wall (4).

16. Machine tool according to any of claims 4 to 15, characterized in that the sealing wall (4) is formed by a casing cover of the operating cylinder (1), located on the piston side (56) facing away from the piston rod (32) connected to the operating piston (6).

17. Machine tool according to any of claims 4 to 16, characterized in that one or more operating valves (16) for fluidic control of the working spaces (7, 8) operating cylinder (1) are provided on the sealing wall (4).

18. Machine tool according to any of claims 4 to 17, characterized in that provided on the end face (37) of the sealing wall (4) facing away from the operating piston (6) is an installation space (38), in particular sealed by a removable cover (39), which may contain for example electrically-actuable pilot valves (34) and/or other electrical and/or electronic components (36, 40) which contribute towards the control of the operating cylinder (1).

19. Machine tool according to any of claims 4 to 18, characterized in that a sensor unit (43) is provided to detect the position of the operating piston (6) and may be fastened to the sealing wall (4) and have electrical signal lines (40) which are guided in particular into the installation space (38) where provided, where they may be connected to an electrical circuit board (36).

## Revendications

1. Machine-outil avec une poupée porte-broche (111) et au moins un changeur d'outil (120), qui transporte des outils d'usinage (116) entre une position de stockage et une position de travail, au changeur d'outil (120) étant affecté, en tant qu'unité d'entraînement (123), au moins un cylindre de travail (1), actionnable par un fluide, avec un corps de cylindre (2), dans lequel un piston de travail (6) est monté déplaçable axialement, caractérisée en ce que sur le cylindre de travail (1) est prévu un dispositif de verrouillage (52) qui verrouille mécaniquement et solidairement avec le corps, le piston de travail (6), dans une position de sûreté, en cas de chute d'une pression de libération, et qui est conçu, sur le plan de la construction, de manière à n'autoriser à nouveau le déplacement du piston de travail (6) que s'il n'est pas soumis à une force de déplacement agissant dans le sens d'un éloignement à partir de sa position de sûreté.

2. Machine-outil selon la revendication 1, caractérisée en ce que la pression de libération est une pression de service du cylindre de travail (1).

3. Machine-outil selon la revendication 1 ou 2, caractérisée en ce que le dispositif de verrouillage (52) est intégré dans le cylindre de travail (1).

4. Machine-outil selon l'une des revendications 1 à 3, caractérisée en ce que le dispositif de verrouillage (52) est associé à une paroi de fermeture (4) frontale du corps de cylindre (2) et sert au verrouillage mécanique, solidaire du corps et non permanent, du piston de travail (6) dans une position de fin de course rapprochée de la paroi de fermeture (4).

5. Machine-outil selon l'une des revendications 1 à 4, caractérisée en ce que le dispositif de verrouillage (52) présente un premier élément de verrouillage (53), qui est placé sur le côté du piston de travail (6) tourné vers la paroi de fermeture (4) et est assemblé avec celui-ci, de manière à se déplacer avec lui, en ce que le dispositif de verrouillage (52) comporte un deuxième élément de verrouillage (58), placé dans ou sur la paroi de fermeture (4), qui est déplaçable transversalement à la direction de la course (28, 29) du piston de travail (6), entre une position de verrouillage et une position de libération, dans la position de verrouillage et lorsque le piston de travail (6) occupe la position de fin de course, ledit élément de verrouillage étant en prise avec le premier élément de verrouillage (53), se trouvant dans ce cas dans une position de blocage, et, dans la position de libération, pour permettre le déplacement axial du piston de travail (6), ledit élément de verrouillage étant dégagé du premier élément de verrouillage (53), en ce que dans l'état de préparation au fonctionnement du cylindre de travail (1), le deuxième élément de verrouillage (58) se trouve sous une pression de fluide (pression de libération), agissant dans le sens de la libération, pression qui est en mesure de maintenir constamment dans la position de libération le deuxième élément de verrouillage (58), à l'encontre d'une force de verrouillage, précontraignant celui-ci dans la direction de la position de verrouillage, pendant la préparation au fonctionnement, et en ce que les moyens de verrouillage, prévus en prise entre eux sur les deux éléments de verrouillage (53, 58), sont conçus, sur le plan de la construction, de manière que la position de libération soit dans l'impossibilité de déplacer le deuxième élément de verrouillage (58), dans la position de libération, à partir de la position de verrouillage, tant que le premier élément de verrouillage (53), occupant la position de blocage, est soumis à une force de déplacement déterminée, qui agit dans le sens d'un éloignement axial du piston de travail (6), à partir de la position de fin de course.

6. Machine-outil selon la revendication 5, caractérisée en ce qu'il est prévu comme pression de libération, agissant sur le deuxième élément de verrouillage (58), la pression de service du cylindre de travail (1).

7. Machine-outil selon la revendication 5 ou 6, caractérisée en ce qu'il est prévu sur le corps de cylindre (2), en particulier sur la paroi de fermeture (4), un dispositif de raccordement (14) pour des conduites de fluide sous pression, transmettant la pression de service, qui communique avec un canal de fluide sous pression (67), prévu à l'intérieur du corps de cylindre (2), lequel mène au deuxième élément de verrouillage (58).

8. Machine-outil selon l'une des revendications 5 à 7, caractérisée en ce que le deuxième élément de verrouillage (58) est précontraint, au moyen d'une force de ressort (69), en direction de la position de verrouillage, force qui est avantageusement donnée par un dispositif mécanique à ressort de pression.

9. Machine-outil selon l'une des revendications 5 à 8, caractérisée en ce que le deuxième élément de verrouillage (58) est en liaison d'entraînement avec un piston de verrouillage (63), qui est soumis d'un côté à la pression de libération, agissant dans la direction de la position de libération.

10. Machine-outil selon l'une des revendications 4 à 9, caractérisée en ce que la pression de libération est indépendante de la pression de travail, qui règne dans la chambre de travail (7), faisant suite à la paroi de fermeture (4), du cylindre de travail (1).

11. Machine-outil selon l'une des revendications 5 à 10, caractérisée en ce que les moyens de verrouillage (74, 75) des deux éléments de verrouillage (53, 58) sont tels qu'ils peuvent passer les uns derrière les autres, par concordance de forme, dans le sens de déplacement (60) du deuxième élément de verrouillage (58).

12. Machine-outil selon l'une des revendications 5 à 11, caractérisée en ce que le moyen de verrouillage (74) du premier élément de verrouillage (53) est formé par un évidement (76), dans lequel le moyen de verrouillage (75), formé en tant que saillie (77), du deuxième élément de verrouillage (58), peut pénétrer, transversalement à la direction (28, 29) de la course du piston de travail (6).

13. Machine-outil selon la revendication 12, caractérisée en ce que le évidement (76) est limité, sur le côté axial tourné à l'opposé du piston de travail (6), par une première surface de verrouillage (79), qui présente au moins une portion de surface, qui est plus éloignée du piston de travail (6) qu'une portion de surface, s'étendant moins profondément, transversalement à la direction (28, 29) de la course du piston de travail (6), et en ce que la saillie (77) présente une deuxième surface de verrouillage (80) correspondante et avantageusement sensiblement complémentaire, qui vient se trouver, dans la position de verrouillage, à côté de la première surface de verrouillage (79), le premier élément de verrouillage (53), se trouvant dans la position de blocage, étant pourvu d'un jeu de déplacement, dans la direction (28, 29) de la course du piston de travail (6), par rapport au deuxième élément de verrouillage (58), se trouvant en position de verrouillage.

14. Machine-outil selon la revendication 12 ou 13, caractérisée en ce que l'évidement (76) se présente à la manière d'une rainure annulaire.

15. Machine-outil selon l'une des revendications 5 à 14, caractérisée en ce que le premier élément de verrouillage (53) est prévu sur un élément (54) du genre doigt, qui peut porter une douille tampon (48), qui fait partie d'un dispositif d'amortissement (47) destiné à amortir la position de fin de course du piston de travail (6), qui est prévu également dans ou sur la paroi de fermeture (4).

16. Machine-outil selon l'une des revendications 4 à 15, caractérisée en ce que la paroi de fermeture (4) est formée par un couvercle du corps du cylindre de travail (1), qui se trouve sur le côté de piston (56), tourné à l'opposé d'une tige de piston (32), reliée au piston de travail (6).

17. Machine-outil selon l'une des revendications 4 à 16, caractérisée en ce que sur la paroi de fermeture (4) est prévu au moins une soupape de travail (16), prévue pour la commande par fluide des chambres de travail (7, 8) du cylindre de travail (1).

18. Machine-outil selon l'une des revendications 4 à 17, caractérisée en ce que sur le côté frontal (37) de la paroi de fermeture (4), tourné à l'opposé du piston de travail (6), il est prévu une chambre d'installation (38), fermée en particulier par un capot de protection (39) amovible, qui peut comporter par exemple des vannes pilotes (34) actionnables électriquement et/ou d'autres composants électriques et/ou électroniques (36, 40), qui contribuent à la commande du cylindre de travail (1).

19. Machine-outil selon l'une des revendications 4 à 18, caractérisée en ce qu'il est prévu un dispositif à capteur (43), pour détecter la position du piston de travail (6), lequel peut être fixé sur la paroi de fermeture (4) et qui comporte des lignes de signaux électriques (40), qui s'étendent en particulier dans la chambre d'installation (38) éventuellement présente, ou elles peuvent être raccordées à une plaquette de circuit électrique imprimé (36).
